# EUROPÄISCHE PATENTSCHRIFT

(11) **EP 2 605 936 B1**
(45) Veröffentlichungstag und Bekanntmachung des Hinweises auf die Patenterteilung: **16.03.2016**
(21) Anmeldenummer: 11736336.6
(22) Anmeldetag: 19.07.2011
(51) Int. Cl.: B60R 13/02, F16B 21/08, F16B 21/09, B60R 21/215, F16B 21/07

(54) **VORRICHTUNG ZUM HALTEN EINES ANBAUTEILES AN EINEM TRÄGERTEIL SOWIE ANORDNUNG MIT EINER DERARTIGEN VORRICHTUNG UND MIT EINEM ANBAUTEIL**
DEVICE FOR HOLDING AN ADD-ON PART ON A SUPPORT PART, AND ARRANGEMENT WITH A DEVICE OF THIS TYPE AND WITH AN ADD-ON PART
DISPOSITIF POUR MAINTENIR UNE PIÈCE RAPPORTÉE SUR UNE PIÈCE PORTEUSE AINSI QUE SYSTÈME COMPRENANT UN TEL DISPOSITIF ET UNE PIÈCE RAPPORTÉE

(30) Priorität: 20.08.2010 DE 102010035012
(43) Veröffentlichungstag der Anmeldung: 26.06.2013
(73) Patentinhaber: A. RAYMOND et Cie, 38000 Grenoble (FR)
(72) Erfinder: PODSADNY, Thomas, 21376 Salzhausen (DE); SPANIER, René, 38106 Braunschweig (DE)
(74) Vertreter: RACKETTE Patentanwälte PartG mbB
(86) Internationale Anmeldenummer: PCT/EP2011/062390
(87) Internationale Veröffentlichungsnummer: WO 2012/022568

(56) Entgegenhaltungen:
- WO-A1-2009/063715
- US-A1- 2004 052 575
- US-A1- 2010 295 272

## Beschreibung

Die Erfindung betrifft eine Vorrichtung zum Halten eines Anbauteiles an einem Trägerteil gemäß dem Oberbegriff des Patentanspruches 1 (WO 2009/063715 A1). Die Erfindung betrifft weiterhin eine Anordnung mit einer derartigen Vorrichtung und mit einem Anbauteil.

Eine andere Vorrichtung ist aus EP 2 090 475 A1 bekannt. Die vorbekannte Vorrichtung zum Halten eines Anbauteiles an einem Trägerteil in einer Montagestellung und in einer Auszugsstellung verfügt über eine Eintauchklammer, die an einem Fußende ausgebildete Rastzungen zum Eingriff mit einem Trägerteil aufweist. Weiterhin ist ein Einsteckteil vorhanden, das mit einer Fixieranordnung zum Eingriff mit einem Anbauteil ausgestattet und zum Verschieben in der Eintauchklammer eingerichtet ist, um das Anbauteil in einer an das Trägerteil angenäherten Montagestellung und in einer weiter von dem Trägerteil beabstandeten Auszugsstellung zu halten.

Der beanspruchten Erfindung liegt die Aufgabe zugrunde, eine Vorrichtung zum Halten eines Anbauteiles an einem Trägerteil gemäß dem Oberbegriff des Patentanspruches 1 sowie eine Anordnung mit einer derartigen Vorrichtung und mit einem Anbauteil anzugeben, bei denen das Anbauteil verhältnismäßig einfach und insbesondere werkzeugfrei von einem Trägerteil abnehmbar ist. Diese Aufgabe wird bei einer Vorrichtung der eingangs genannten Art erfindungsgemäß mit den kennzeichnenden Merkmalen des Patentanspruches 1 gelöst.

Diese Aufgabe wird bei einer Anordnung mit einer derartigen Vorrichtung und mit einem Anbauteil erfindungsgemäß mit den Merkmalen des Patentanspruches 8 gelöst.

Durch das Vorsehen einer erfindungsgemäß ausgebildeten Stützanordnung ist das Anbauteil in der Montagestellung über die Eintauchklammer stabil an dem Trägerteil gehalten, während es ausgehend von der Auszugsstellung nach Überwinden eines Widerstandes und nach Ausklinken des Einsteckteiles außer Eingriff mit der Eintauchklammer von dem Trägerteil entnehmbar ist. Damit ist auch die Eintauchklammer wieder zugänglich und lässt sich von dem Trägerteil abnehmen sowie bei einer erneuten Montage eines Anbauteiles an dem Trägerteil wieder verwenden.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnung.

Es zeigen:
- Fig. 1: in einer perspektivischen Ansicht ein Ausführungsbeispiel einer erfindungsgemäßen Vorrichtung mit einer Eintauchklammer und mit einem Einsteckteil, die außer Eingriff sind,
- Fig. 2: in einer perspektivischen Ansicht das Ausführungsbeispiel gemäß Fig. 1 mit der Eintauchklammer und dem Einsteckteil in Eingriff miteinander, Fig. 3 in einer Schnittansicht eine erfindungsgemäße Anordnung mit einer erfindungsgemäßen Vorrichtung gemäß dem Ausführungsbeispiel nach Fig. 1 und mit einem Anbauteil, das über die erfindungsgemäße Vorrichtung in einer Montagestellung an einem Trägerteil gehalten ist,
- Fig. 4: in einer Schnittansicht die Anordnung gemäß Fig. 3 mit dem Trägerteil in einer Auszugsstellung,
- Fig. 5: in einer Schnittansicht die Anordnung gemäß Fig. 3 während eines Demontagevorganges mit einem ausgehend von der Auszugsstellung gemäß Fig. 4 an das Trägerteil angenäherten Anbauteil,
- Fig. 6: in einer Schnittansicht den Abschluss des Demontagevorganges mit einem von einem Trägerteil abgenommenen Anbauteil,
- Fig. 7: in einer perspektivischen Ansicht ein weiteres Ausführungsbeispiel einer erfindungsgemäßen Vorrichtung mit einer Eintauchklammer und mit einem Einsteckteil, die miteinander in Eingriff sind, und
- Fig. 8: in einer Schnittansicht eine erfindungsgemäße Anordnung mit einer erfindungsgemäßen Vorrichtung gemäß dem Ausführungsbeispiel nach Fig. 7 und mit einem Anbauteil, das in einer Montagestellung an einem Trägerteil gehalten ist.

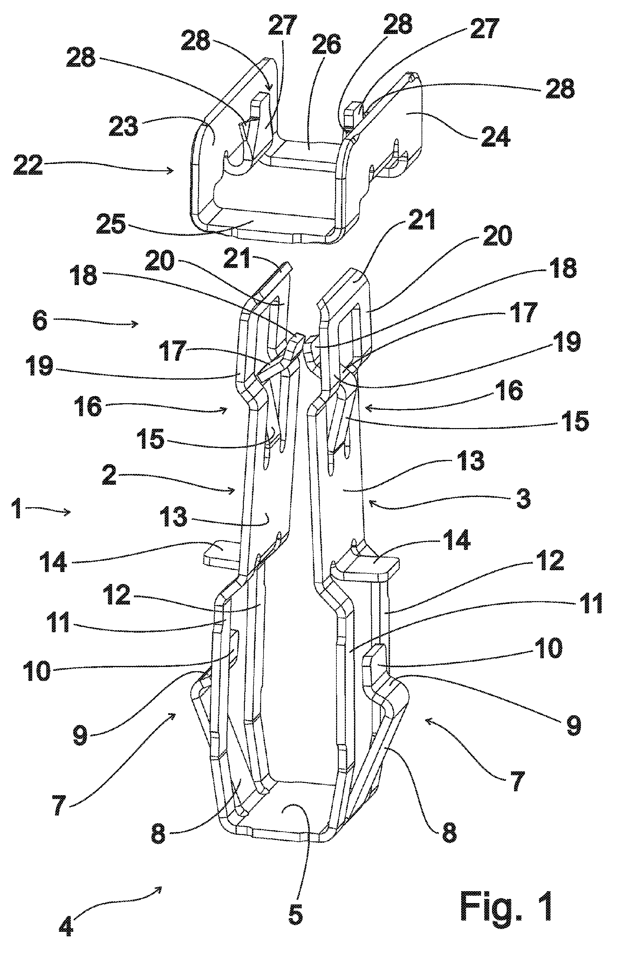

Fig. 1 zeigt in einer perspektivischen Ansicht ein Ausführungsbeispiel einer erfindungsgemäßen Vorrichtung, die über eine vorzugsweise als Stanz-Biege-Teil aus einem Metallblech hergestellte längliche Eintauchklammer 1 verfügt. Die U-artig ausgebildete Eintauchklammer 1 weist einen ersten Klammerschenkel 2 und einen zweiten Klammerschenkel 3 auf, die an einem Fußende 4 über eine Fußplatte 5 miteinander verbunden sind. In der in Fig. 1 dargestellten relaxierten Anordnung sind die Klammerschenkel 2, 3 ausgehend von dem Fußende 4 in Richtung eines dem Fußende 4 gegenüber liegenden Kopfendes 6 schräg aufeinander zu laufend ausgerichtet.

Jeder Klammerschenkel 2, 3 verfügt über eine federnde Rastzunge 7, die mit einem geraden, schräg nach außen von dem jeweiligen Klemmschenkel 2, 3 weg laufenden Anbindungsabschnitt 8 mit der Fußplatte 5 in Verbindung steht. An dem von der Fußplatte 5 abgewandten Ende des Anbindungsabschnittes 8 ist jede Rastzunge 7 mit einem Anlageabschnitt 9 ausgebildet, der in etwa rechtwinklig zu dem Anbindungsabschnitt 8 ausgerichtet ist und sich in Richtung der anderen Rastzunge 7 erstreckt. An den Anlageabschnitt 9 wiederum ist an dessen von dem Anbindungsabschnitt 8 abgewandten Ende ein Fangabschnitt 10 angesetzt, der in der relaxierten Anordnung der Rastzungen 7 gemäß Fig. 1 in etwa rechtwinklig zu der Fußplatte 5 ausgerichtet ist.

Beidseitig jeder Rastzunge 7 ist jeder Klammerschenkel 2, 3 mit einem ersten fußseitigen Randsteg 11 und mit einem zweiten fußseitigen Randsteg 12 ausgebildet, die sich von ihrem Anbindungsbereich mit der Fußplatte 5 in Richtung des Kopfendes 6 erstrecken, in Längsrichtung der Eintauchklammer 1 über die Rastzungen 7 überstehen und in einem vollflächigen Mittenabschnitt 13 enden. Die fußseitigen Randstege 11, 12 sind im Anbindungsbereich an dem Mittenabschnitt 13 schräg aufeinander zu weisend abgekantet.

Im Anbindungsbereich der fußseitigen Randstege 11, 12 an den Mittenabschnitt 13 weist jeder Klammerschenkel 2, 3 eine Auflagezunge 14 auf, der in etwa parallel zu der Fußplatte 5 ausgerichtet und von dem anderen Klammerschenkel 2, 3 wegweisend nach außen abgestellt ist.

Auf der der Auflagezunge 14 abgewandten Seite ist an jedem Mittenabschnitt 13 mit einem geraden, über den Mittenabschnitt 13 nach außen schräg überstehenden Anbindungsabschnitt 15 eine Stützzunge 16 angeformt, die an dem dem Mittenabschnitt 13 abgewandten Ende des Anbindungsabschnittes 15 über einen Auflageabschnitt 17 und über einen Innenabschnitt 18 verfügt. Der Auflageabschnitt 17 greift zwischen zwei beidseitig jeder Stützzunge 16 angeordnete kopfseitige Randstege 19, 20 von der Außenseite des betreffenden Klammerschenkels 2, 3 auf die dem anderen Klammerschenkel 2, 3 zugewandte Innenseite durch. Die dem Mittenabschnitt 13 abgewandten Enden der kopfseitigen Randstege 19, 20 sind jeweils über eine über eine Abkantung aufeinander zu weisend gekrümmte Kopfzunge 21 miteinander verbunden.

Die kopfseitigen Randstege 19, 20 weisen im Mittenbereich eine Abkantstufe auf, die den an die jeweilige Kopfzunge 21 angrenzenden Abschnitt der kopfseitigen Randstege 19, 20 gegenüber dem an dem Mittenabschnitt 13 angrenzenden Abschnitt der kopfseitigen Randstege 19, 20 weiter voneinander beabstandet.

Weiterhin ist die erfindungsgemäße Vorrichtung in dem Ausführungsbeispiel gemäß Fig. 1 mit einem ebenfalls vorzugsweise als Stanz-Biege-Teil aus einem Metallblech hergestellten, U-artig geformten Einsteckteil 22 ausgestattet, das über zwei im Wesentlichen parallel zueinander ausgerichtete Seitenschenkel 23, 24 und über zwei randseitig der Seitenschenkel 23, 24 angeordnete Verbindungsstege 25, 26 verfügt, die in einem Abstand zueinander angeordnet sind und die Seitenschenkel 23, 24 miteinander verbinden. An jedem Seitenschenkel 23, 24 ist eine Fixierzunge 27 angeformt, die sich von der den Verbindungsstegen 25, 26 zugewandten Seite halbkreisförmig umgebogen von den Verbindungsstegen 25, 26 weg erstreckt und die auf den aufeinander zu weisenden Innenseiten der Seitenschenkel 23, 24 liegen. An den seitlichen Randseiten der Fixierzungen 27 sind in Richtung des Seitenschenkels 23, 24, an den die jeweilige Fixierzunge 27 angeformt ist, abgewinkelte Randkrallen 28 angeformt.

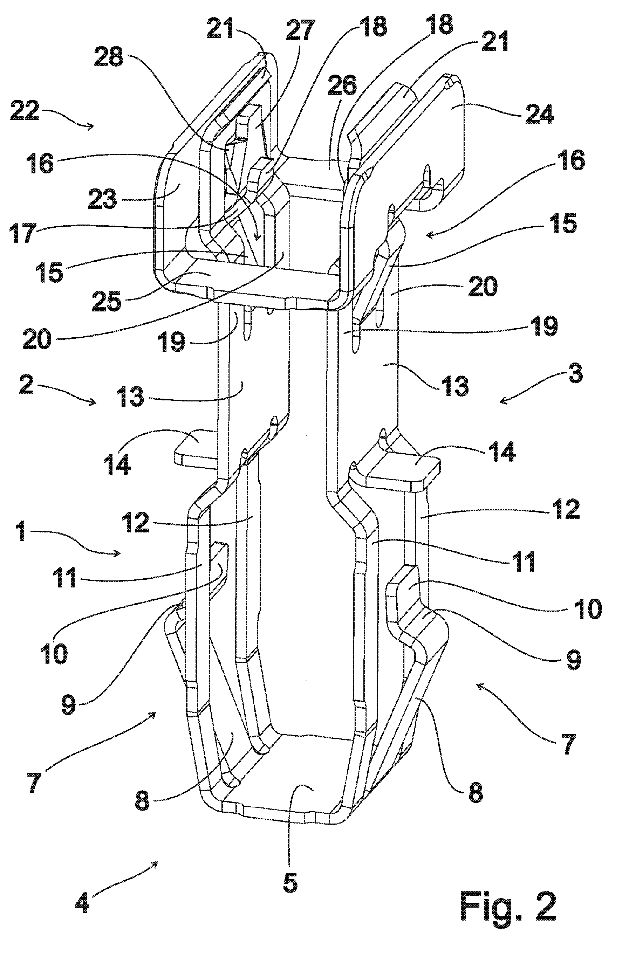

Fig. 2 zeigt in einer perspektivischen Ansicht das Ausführungsbeispiel gemäß Fig. 1 mit einem auf die Eintauchklammer 1 aufgesteckten Einsteckteil 22. In der in Fig. 2 dargestellten Anordnung tauchen die Fixierzungen 27 nach Aufweiten der Klammerschenkel 2, 3 in eine in etwa parallele Ausrichtung zueinander durch den zwischen den kopfseitigen Randstegen 19, 20 ausgebildeten Freiraum durch und liegen mit ihren den Verbindungsstegen 25, 26 zugewandten, rund gebogenen Abschnitten auf den Auflageabschnitten 17 der zusammen mit den Randstegen 19, 20 eine Stützanordnung bildenden Stützzungen 16 auf. Die Kopfzungen 21 sind zwischen den Seitenschenkeln 23, 24 des Einsteckteiles 22 sowie den freien Enden der Fixierzungen 27 angeordnet sowie durch die Randkrallen 28 fixiert. Die kopfseitigen Randstege 19, 20 der Eintauchklammer 1 treten zwischen den Verbindungsstegen 25, 26 hindurch. Aufgrund des Eingriffs des Einsteckteiles 22 mit den Klammerschenkeln 2, 3 der Eintauchklammer 1 sind die Klammerschenkel 2, 3 nunmehr in einer vorgespannten, im Wesentlichen parallelen Ausrichtung. In diesem in Fig. 2 dargestellten Anlieferungszustand ist die erfindungsgemäße Vorrichtung bestimmungsgemäß einsetzbar.

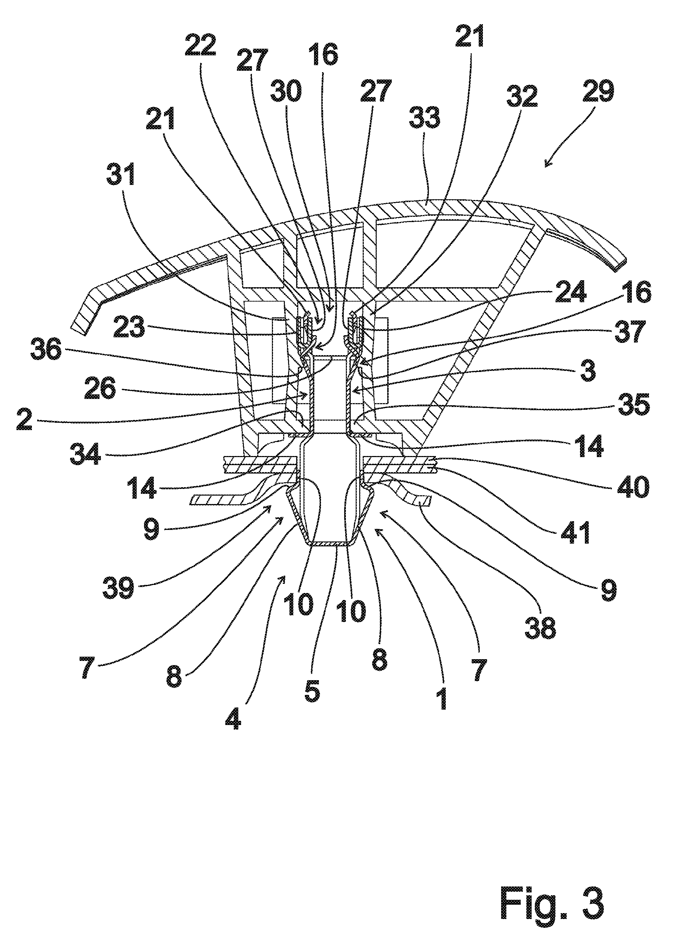

Fig. 3 zeigt in einer Schnittansicht eine erfindungsgemäße Anordnung mit einem Anbauteil 29 und mit einer erfindungsgemäßen Vorrichtung gemäß dem Ausführungsbeispiel nach Fig. 1. Das Anbauteil 29 verfügt über eine Aufnahmekammer 30, die durch zwei einander gegenüber liegende Außenwände 31, 32 seitlich begrenzt ist. An den Außenwänden 31, 32 sind an ihren von einer Deckseite 33 des Anbauteiles 29 abgewandten Endbereichen Bodenstege 34, 35 angeformt, die aufeinander zu weisen und durch die die Klammerschenkel 2, 3 durchtreten. In einem Abstand von den Bodenstegen 34, 35 sind an den Außenwänden 31, 32 Zwischenstege 36, 37 ausgebildet, die in die Aufnahmekammer 30 hineinragen. In der Montagestellung gemäß Fig. 3 hintergreifen die Zwischenstege 36, 37 das Einsteckteil 22 im Verbindungsbereich der Seitenschenkel 23, 24 und der Verbindungsstege 25, 26, während die Bodenstege 34, 35 auf den dem Kopfende 6 der Eintauchklammer 1 zugewandten Seiten der Auflagezungen 14 aufliegen.

In dieser relativen Positionierung wurde zum Einnehmen der Montagestellung gemäß Fig. 3 die Eintauchklammer 1 mit dem Fußende 4 voran durch eine in einem Trägerteil 38 ausgebildete Trägerteilausnehmung 39 eingeführt, bis die Anlageabschnitte 9 der Rastschenkel 7 den Rand der Trägerteilausnehmung 39 hintergreifen und die Fangabschnitte 10 an der Innenseite der Trägerteilausnehmung 39 anliegen. Weiterhin lässt sich der Darstellung gemäß Fig. 3 entnehmen, dass zwischen dem Anbauteil 29 und dem Trägerteil 38 eine flexible Textillage 40 und eine biegesteife Unterlage 41 angeordnet sind, die Bestandteile beispielsweise einer Airbageinrichtung sind und auf denen das Anbauteil 29 aufliegt.

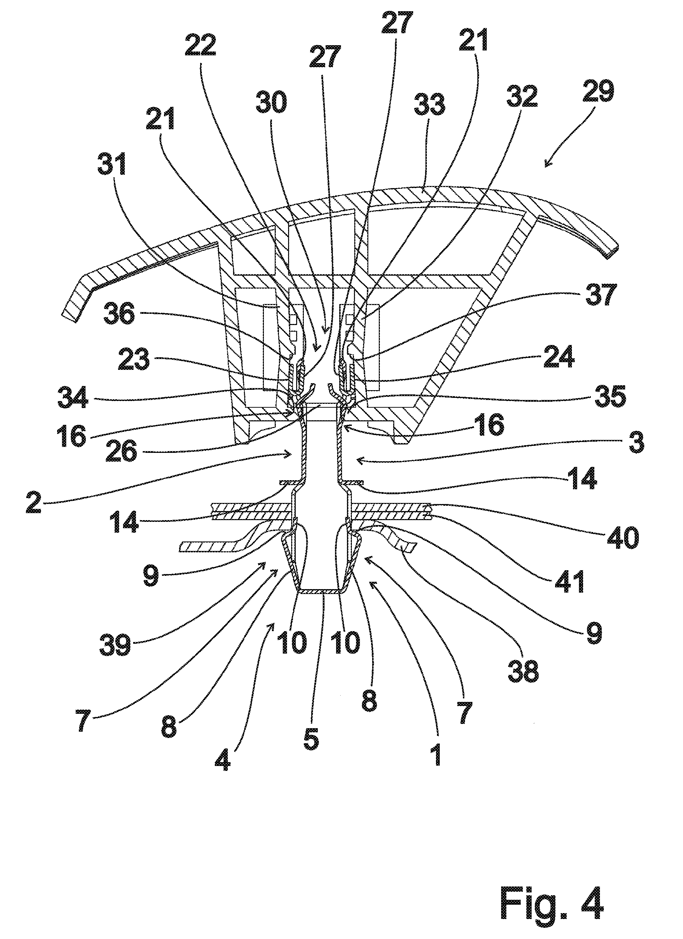

Fig. 4 zeigt in einer Schnittansicht die erfindungsgemäße Anordnung mit einer erfindungsgemäßen Vorrichtung mit Eintauchklammer 1 sowie mit Einsteckteil 22 und mit dem Anbauteil 29 in einer gegenüber der Montagestellung gemäß Fig. 3 weiter von dem Trägerteil 38 beabstandeten Auszugsstellung des Anbauteiles 29, wie sie typischerweise nach Aufblasen eines Airbags der Airbaganordnung mit Ausüben einer in Längsrichtung der erfindungsgemäßen Vorrichtung ausgeübten Kraft durch Abheben des Anbauteiles 29 von dem Trägerteil 38 eingenommen worden ist. Aufgrund der in Längsrichtung ausgeübten Kraft sind die Zwischenstege 36, 37 durch Ausweichen von dem Einsteckteil 22 weg aus ihrem Eingriff mit dem Einsteckteil 22 gelöst worden, so dass die Zwischenstege 36, 37 nunmehr gegenüber liegend den freien Deckseiten der Seitenschenkel 23, 24 angeordnet sind und die Bodenstege 34, 35 im Verbindungsbereich der Seitenschenkel 23, 24 sowie der Verbindungsstege 25, 26 das Einsteckteil 22 hintergreifen.

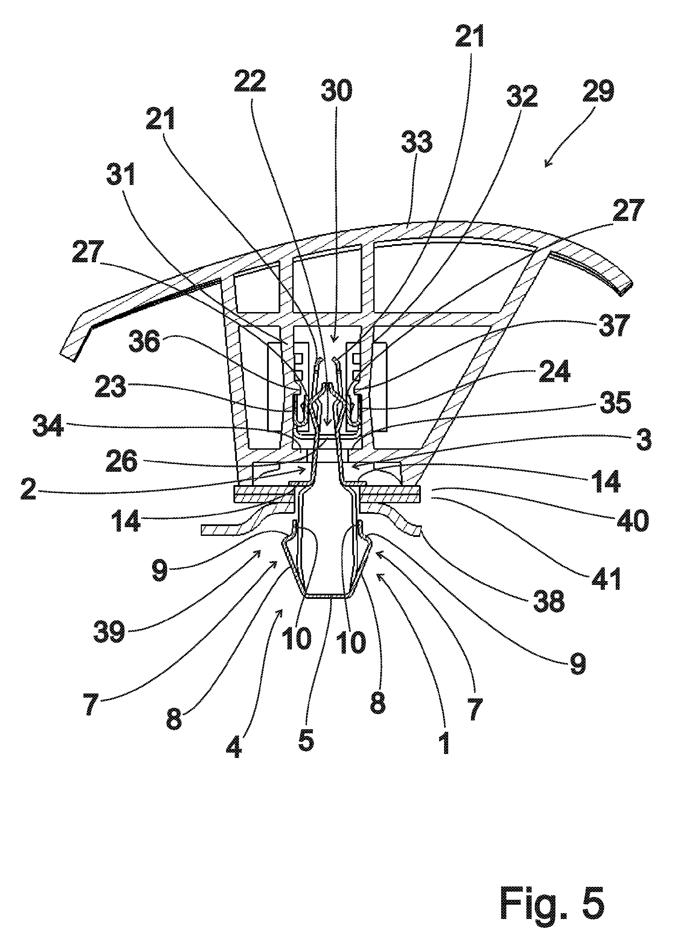

Fig. 5 zeigt in einer Schnittansicht die Anordnung gemäß Fig. 4 nach Bewegen des Anbauteiles 29 auf das Trägerteil 38 zu, bis die Auflagezungen 14 nunmehr auf der Textillage 40 aufliegen und die Zwischenstege 36, 37 das Einsteckteil 22 durch Aufliegen auf den freien Deckseiten der Seitenschenkel 23, 24 nach Überwinden eines Widerstandes unter Ausgleiten der Fixierzungen 27 aus dem Kopfende 6 der Eintauchklammer 1 außer Eingriff mit der Eintauchklammer 1 gebracht haben. Die beiden Kopfzungen 21 der Klammerschenkel 2, 3 sind nun außer Eingriff mit den Fixierzungen 27 des Einsteckteiles 22, und die beiden Stützzungen 16 sind wieder ausgefedert, stützen sich nun ihrerseits an den Innenseiten der Fixierzungen 27 nach außen hin ab und üben über die Anbindungsabschnitte 15 auf die Klammerschenkel 2, 3 eine derartig gerichtee Kraft aus, dass die Klammerschenkel 2, 3 aufeinander zu laufen. Dadurch sind die Kopfzungen 21 innenseitig einer von dem Fußabschnitt 4 wegweisend gedachten Verlängerung der beiden Fizierzungen 27 angeordnet. Damit ist sichergestellt, daß die beiden Kopfzungen 21 im weiteren Verlauf der Demontage nicht wieder auf den Fixierzungen 27 beziehungsweise den Randkrallen 28 aufsetzen können, so dass das Abnehmen des Anbauteiles 29 auch bei einer relativ geringen Eigenrelaxation der Klammerschenkel 2, 3 sichergestellt ist. Die nach innen gerichteten Abkantungen der Kopfzungen 21 gewährleisten, daß diese beim Annähern des Anbauteiles 29 an das Trägerteil 38 nicht an den Zwischenstegen 36, 37 hängen bleiben.

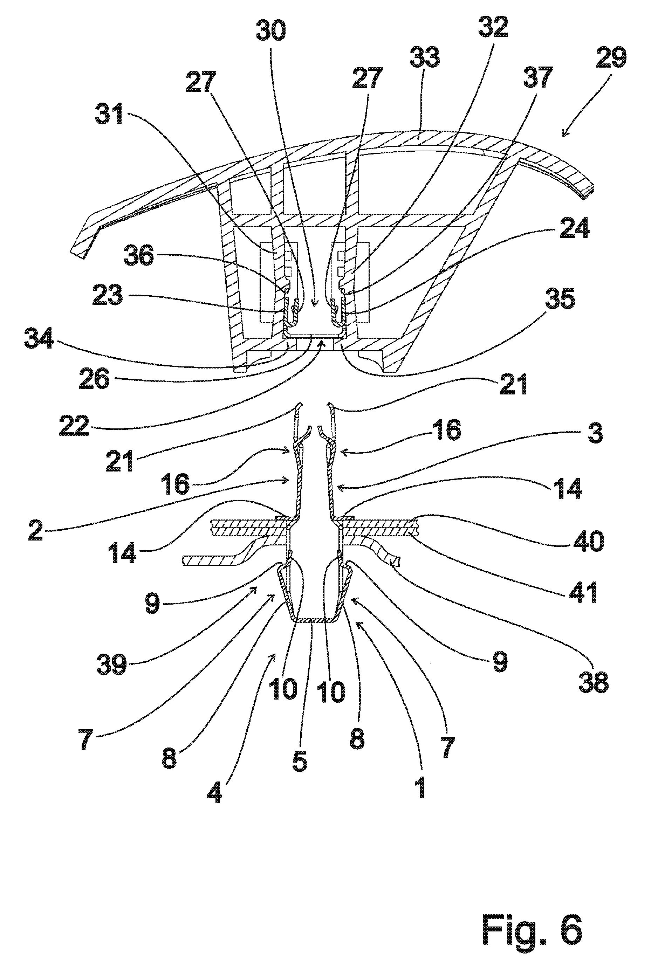

Fig. 6 zeigt in einer Schnittansicht die Anordnung aus Eintauchklammer 1, Einsteckteil 22, Anbauteil 29 und Trägerteil 38 gemäß Fig. 5 nach Abheben des Anbauteiles 29 von dem Trägerteil 38. Aufgrund der Eingriffsfreiheit zwischen der Eintauchklammer 1 und dem Einsteckteil 22 in der Anordnung gemäß Fig. 5 lässt sich das Anbauteil 29 im Wesentlichen widerstandsfrei von dem Trägerteil 38 abheben, wobei die Eintauchklammer 1 in dem Trägerteil 38 und das Einsteckteil 22 in dem Anbauteil 29 verbleiben. Die nunmehr freiliegende Eintauchklammer 1 lässt sich anschließend aus dem Trägerteil 38 herausziehen, während das Einsteckteil 22 der Aufnahmekammer 30 entnommen werden kann. Anschließend lassen sich die Eintauchklammer 1 sowie das Einsteckteil 22 wieder in den Anlieferungszustand gemäß Fig. 2 bringen und erneut verwenden.

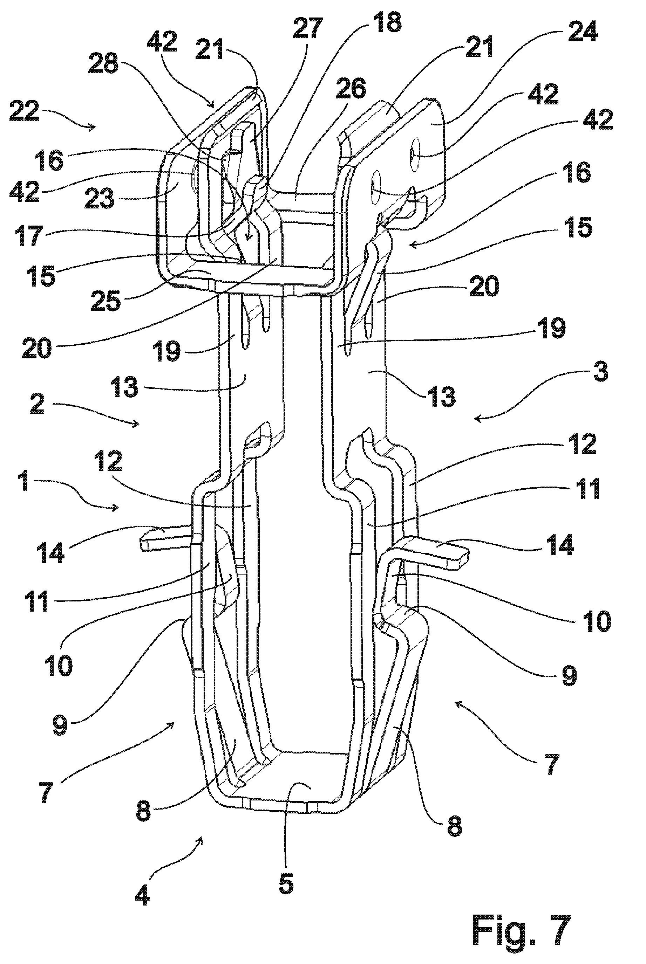

Fig. 7 zeigt in einer perspektivischen Ansicht ein weiteres Ausführungsbeispiel einer erfindungsgemäßen Vorrichtung mit einer Eintauchklammer 1 und mit einem Einsteckteil 22 in dem Anlieferungszustand gemäß Fig. 2. Zum Vermeiden von Wiederholungen sind sich bei dem Ausführungsbeispiel gemäß Fig. 1 und bei dem Ausführungsbeispiel gemäß Fig. 7 einander entsprechende Elemente mit den gleichen Bezugszeichen versehen und im Weiteren nicht näher erläutert. Bei dem Ausführungsbeispiel gemäß Fig. 7 sind die Auflagezungen 14 an den von dem jeweiligen Anlageabschnitt 9 abgewandten Ende des Fangabschnittes 10 jeder Rastzunge 7 angesetzt und in etwa parallel zu dem jeweiligen Anlageabschnitt 9 ausgerichtet. Weiterhin sind bei dem Einsteckteil 22 beidseitig jeder Fixierzunge 27 nach innen vorstehende Verprägungen 42 in die Seitenschenkel 23, 24 eingebracht, um zu verhindern, dass die Klammerschenkel 2, 3 der Eintauchklammer 1 mit ihren Kopfzungen 21 in den herstellbedingt toleranzbehafteten Freiraum zwischen den Randkrallen 28 und den Seitenschenkel 23, 24 des Einsteckteiles 22 hineinrutschen und dort verklemmen können.

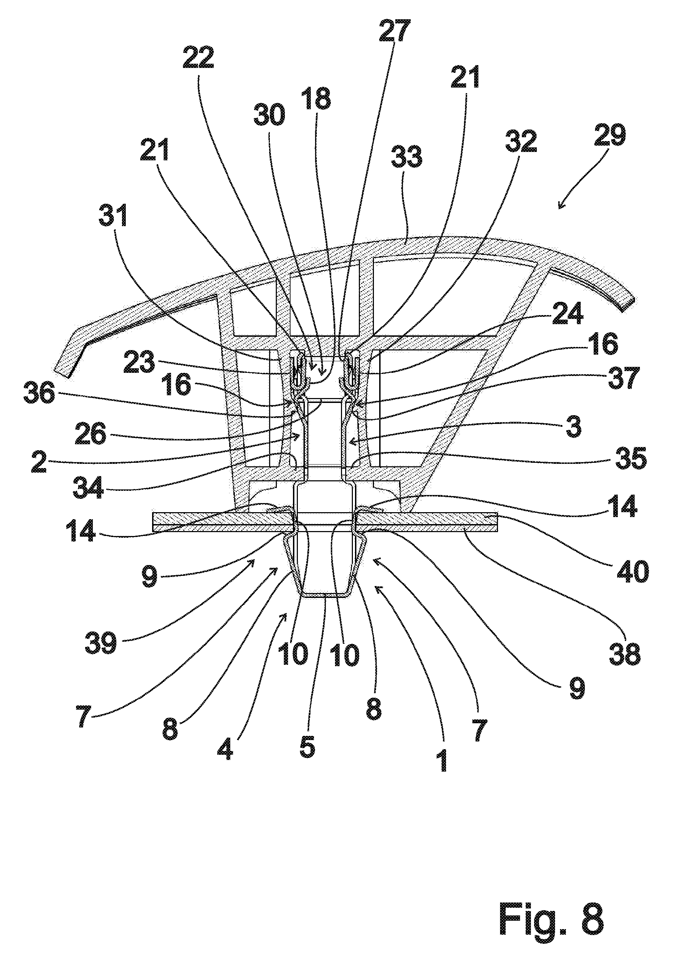

Fig. 8 zeigt in einer Schnittansicht das Ausführungsbeispiel gemäß Fig. 7 in einer Anordnung entsprechend Fig. 3 mit einem Anbauteil 29 in einer an ein Trägerteil 38 dicht angenäherten Montagestellung. Aus Fig. 8 ist ersichtlich, dass die Anlageabschnitte 9 der Rastzungen 7 eine in dem Trägerteil 38 ausbildete Trägerteilausnehmung 39 hintergreifen, während die Auflagezungen 14 auf einer auf das Trägerteil 38 aufgelegten Textillage 40 insbesondere einer Airbaganordnung aufliegen, auf der ebenfalls das Anbauteil 29 anliegt. Nach einer Explosion der Airbageinrichtung unter Abheben der Textillage 40 von dem Trägerteil 38 wird die Anordnung gemäß Fig. 8 in eine Anordnung entsprechend Fig. 4 bei dem Ausführungsbeispiel gemäß Fig. 1 überführt und wie in Zusammenhang mit Fig. 5 und Fig. 6 erläutert demontiert.

## Patentansprüche

1. Vorrichtung zum Halten eines Anbauteiles (29) an einem Trägerteil (38) in einer Montagestellung und in einer Auszugsstellung, in der das Anbauteil (29) gegenüber der Montagestellung weiter von dem Trägerteil (38) beabstandet ist, mit einer U-förmigen Eintauchklammer (1), die bei bestimmungsgemäßer Verwendung in einer in dem Trägerteil (38) eingebrachten Trägerteilausnehmung (39) angeordnet ist, und mit einem Einsteckteil (22), das bei bestimmungsgemäßer Anordnung verschiebbar mit der Eintauchklammer (1) und mit dem Anbauteil (29) verbunden ist, wobei das Einsteckteil (22) in der Montagestellung des Anbauteiles (29) in einer an der Eintauchklammer (1) ausgebildeten Stützanordnung (16, 19, 20) angeordnet und gegen Entfernen aus der Stützanordnung (16, 19, 20) in Richtung von dem Trägerteil (38) weg gesichert ist, wobei in der Auszugsstellung des Anbauteiles (29) die Stützanordnung (16, 19, 20) einem Verschieben des Einsteckteiles (22) außer Eingriff mit der Stützanordnung (16, 19, 20) in Richtung des Trägerteiles (38) einen Widerstand entgegensetzt, wobei nach Überwinden des Widerstandes das Einsteckteil (22) eingriffsfrei mit der Eintauchklammer (1) sowie von dieser abnehmbar ist, und wobei die Eintauchklammer (1) zwei Klammerschenkel (2, 3) aufweist, **dadurch gekennzeichnet, dass** das Einsteckteil (22) zwei zueinander parallele Seitenschenkel (23, 24) aufweist, die über zwei eine Durchsteckausnehmung begrenzende Verbindungsstege (25, 26) miteinander verbunden sind, dass die Stützanordnung (16, 19, 20) zwei Stützzungen (16) aufweist, die an jeweils einem Klammerschenkel (2, 3) der Eintauchklammer (1) ausgebildet, in Freimachungen angeordnet sowie aufeinander zu sowie in Richtung der freien Enden der Klammerschenkel (2, 3) weisend angestellt sind, und dass das Einsteckteil (22) an den Seitenschenkeln (23, 24) ausgebildete Fixierzungen (27) aufweist, die unter Einschluss der Klammerschenkel (2, 3) durch die Verbindungsstege (25, 26) zwischen den Stützzungen (16) und Kopfzungen (21) von Randstegen (19, 20) der Eintauchklammer (1) in der Montagestellung auf Auflageabschnitten (17) der Stützzungen (16) aufliegen und zum Ausgleiten aus den Freimachungen dimensioniert sind.

2. Vorrichtung nach Anspruch 1, **dadurch gekennzeichnet, dass** die Klammerschenkel (2, 3) im Bereich eines Fußendes (4) der Eintauchklammer (1) über eine Fußplatte (5) miteinander verbunden sind.

3. Vorrichtung nach Anspruch 1 oder Anspruch 2, **dadurch gekennzeichnet, dass** die Klammerschenkel (2, 3) in einem dem Fußende (4) abgewandten Kopfende (6) in relaxierter Anordnung schräg aufeinander zu laufen.

4. Vorrichtung nach einem der Ansprüche 1 bis 3, **dadurch gekennzeichnet, dass** an jedem Klammerschenkel (2, 3) eine Rastzunge (7) ausgebildet ist, die mit einem Anlageabschnitt (9) zum Hintergreifen eines Trägerteiles (38) ausgebildet ist.

5. Vorrichtung nach Anspruch 4, **dadurch gekennzeichnet, dass** an jedem Klammerschenkel (2, 3) oder an jeder Rastzunge (7) eine Auflagezunge (14) ausgebildet ist, die dem Anlageabschnitt (9) in Richtung der Stützanordnung (16, 19, 20) gegenüberliegt.

6. Vorrichtung nach einem der Ansprüche 1 bis 5, **dadurch gekennzeichnet, dass** Mittel (28, 42) zum spielfreien Halten des Einsteckteiles (22) vorhanden sind.

7. Vorrichtung nach Anspruch 6, **dadurch gekennzeichnet, dass** die Mittel zum spielfreien Halten an den Fixierzungen (27) ausgebildete Randkrallen (28) und/oder an Seitenschenkeln (23, 24) des Einsteckteiles (22) ausgebildete Verprägungen (42) aufweisen.

8. Anordnung mit einer Vorrichtung gemäß einem der Ansprüche 1 bis 7 und mit einem Anbauteil (29), **dadurch gekennzeichnet, dass** das Anbauteil (29) Zwischenstege (36, 37) aufweist, die in der Montagestellung auf der einem Fußende (4) der Eintauchklammer (1) zugewandten Seite des Einsteckteiles (22) und in der Auszugsstellung auf der dem Fußende (4) der Eintauchklammer (1) abgewandten Seite des Einsteckteiles (22) angeordnet sind.

## Claims

1. Device for holding an added part (29) against a carrying part (38) in a fitted position, and in a position for withdrawal in which the added part (29) is spaced further away from the carrying part (38) than in the fitted position, having a U-shaped insertable clip (1) which, when used as intended, is arranged in an opening (39) made in the carrying part (38), and having a plug-on part (22) which, when positioned as intended, is so connected to the insertable clip (1) and to the added part (29) as to be displaceable, the plug-on part (22), when the added part (29) is in the fitted position, being arranged in a supporting arrangement (16, 19, 20) formed on the insertable clip (1) and being secured against removal from the supporting arrangement (16, 19, 20) in the direction away from the carrying part (38), the supporting arrangement (16, 19, 20), when the added part (29) is in the position for withdrawal, setting up a resistance to the plug-on part (22) being shifted out of engagement with the supporting arrangement (16, 19, 20) in the direction of the carrying part (38), the plug-on part (22) being out of engagement with the insertable clip (1) and able to be removed therefrom once the resistance has been overcome, and the insertable clip (1) having two clip arms (2, 3), **characterised in that** the plug-on part (22) has two mutually parallel side-walls (23, 24) which are connected together by two connecting cross-pieces (25, 26) which define an entry opening, **in that** the supporting arrangement (16, 19, 20) has two support tongues (16) which are formed on respective ones of the clip arms (2, 3) of the insertable clip (1), which are arranged in apertures and which are positioned to point towards one another and in the direction of the free ends of the clip arms (2, 3), and **in that** the plug-on part (22) has, formed on its side-walls (23, 24), fixing tongues (27) which, in the fitted position, while the clip arms (2, 3) are enclosed by means of the connecting cross-pieces (25, 26), rest on supporting portions (17) of the supporting tongues (16) in a position between the supporting tongues (16) and top lips (21) of edge portions (19, 20) of the insertable clip (1), and which are sized to slide out of the apertures.

2. Device according to claim 1, **characterised in that** the clip arms (2, 3) are connected together in the region of a bottom end (4) of the insertable clip (1) by means of a bottom plate (5).

3. Device according to claim 1 or claim 2, **characterised in that** in a relaxed position the clip arms (2, 3) converge obliquely at a top end (6) remote from the bottom end (4).

4. Device according to one of claims 1 to 3, **characterised in that** there is formed on each clip arm (2, 3) a latching tongue (7) of which a portion for contact (9) is designed to fit behind a carrying part (38).

5. Device according to claim 4, **characterised in that** there is formed on each clip arm (2, 3) or on each latching tongue (7) a supporting ledge (14) which is situated opposite the portion for contact (9) in the direction towards the supporting arrangement (16, 19, 20).

6. Device according to one of claims 1 to 5, **characterised in that** means (28, 42) are present for holding the push-on part (22) to be free from play.

7. Device according to claim 6, **characterised in that** the means for holding to be free from play have edge claws (28) formed on the fixing tongues (27) and/or embossings (42) formed on side-walls (23, 24) of the push-on part (22).

8. Arrangement having a device according to one of claims 1 to 7 and having an added part (29), **characterised in that** the added part (29) has intermediate ridges (36, 37) which, in the fitted position, are arranged on the side of the push-on part (22) adjacent a bottom end (4) of the insertable clip (1) and, in the position for withdrawal, on the side of the push-on part (22) remote from the bottom end (4) of the insertable clip (1).

## Revendications

1. Dispositif de maintien d'une pièce rapportée (29) sur une pièce faisant office de support (38) dans une position de montage, et dans une position d'extraction dans laquelle la pièce rapportée (29) se trouve à une plus grande distance de la pièce faisant office de support (38) comparativement à la position de montage, comprenant une agrafe insérable en forme d'étrier (1) qui, lorsqu'elle est utilisée dans les conditions correspondant à sa destination, est disposée dans un évidement (39) ménagé en correspondance dans la pièce faisant office de support (38), et comprenant un élément d'emmanchement (22) qui, dans l'agencement correspondant à sa destination, est raccordé par un mouvement de déplacement coulissant à l'agrafe insérable (1) et à la pièce rapportée (29), l'élément d'emmanchement (22) étant en l'occurrence, dans la position de montage de la pièce rapportée (29), disposé dans une structure d'appui (16, 19, 20) prévue à cet effet sur l'agrafe insérable (1) et empêché de se dégager de la structure d'appui (16, 19, 20) dans la direction allant en s'écartant de la pièce faisant office de support (38), la structure d'appui (16, 19, 20) opposant en l'occurrence, lorsque la pièce rapportée (29) se trouve dans sa position d'extraction possible, une résistance à une désolidarisation de l'élément d'emmanchement (22) dans la direction correspondant à la pièce faisant office de support (38), une fois cette résistance vaincue l'élément d'emmanchement (22) étant en l'occurrence dégagé de son emprise d'accouplement avec l'agrafe insérable et pouvant ainsi également être retiré de celle-ci, et l'agrafe insérable (1) étant en l'occurrence munie de deux pattes d'agrafage (2, 3), **caractérisé en ce que** l'élément d'emmanchement (22) comporte deux segments latéraux (23, 24) disposés parallèlement l'un par rapport à l'autre, qui sont raccordés ensemble par l'intermédiaire de deux barrettes de liaison (25, 26) qui contribuent à définir un passage d'emmanchement, **en ce que** la structure d'appui (16, 19, 20) comporte deux languettes d'appui (16), qui sont réalisées sur respectivement une patte d'agrafage (2, 3) de l'agrafe insérable (1), sont disposées dans des dégagements et également orientées en rapprochement l'une de l'autre ainsi que dans la direction des extrémités libres des pattes d'agrafage (2, 3), et **en ce que** l'élément d'emmanchement (22) comporte, au niveau des segments latéraux (23, 24), des languettes d'immobilisation en position (27) qui, les pattes d'agrafage (2, 3) étant enserrées par les barrettes de liaison (25, 26) entre les languettes d'appui (16) et les languettes supérieures (21) de segments de rive (19, 20) sont, dans la position de montage, appliquées en contact d'appui sur des portions d'assise (17) des languettes d'appui (16) et sont dimensionnées pour pouvoir être extraites des dégagements par un mouvement glissant.

2. Dispositif selon la revendication 1, **caractérisé en ce que** les pattes d'agrafage (2, 3) sont raccordées ensemble au niveau de l'extrémité inférieure (4) de l'agrafe insérable (1) par l'intermédiaire d'une plaque inférieure (5).

3. Dispositif selon la revendication 1 ou la revendication 2, **caractérisé en ce que**, dans leur position libre, les pattes d'agrafage (2, 3) convergent l'une vers l'autre selon une orientation oblique au niveau de leur extrémité supérieure (6) située à l'opposé de leur extrémité inférieure (4).

4. Dispositif selon l'une des revendications 1 à 3, **caractérisé en ce que** chaque patte d'agrafage (2, 3) est munie d'une languette de mise en prise d'encastrement (7) qui comporte une portion formant portée de butée (9) destinée à venir cramponner par derrière une pièce faisant office de support (38).

5. Dispositif selon la revendication 4, **caractérisé en ce qu'**il est prévu, sur chaque patte d'agrafage (2, 3) ou sur chaque languette de mise en prise d'encastrement (7), une languette formant portée d'appui (14), qui, dans la direction de la structure d'appui (16, 19, 20) est disposée vis-à-vis de la portion formant portée de butée (9).

6. Dispositif selon l'une des revendications 1 à 5, **caractérisé en ce qu'**il est prévu des moyens (28, 42) pour assurer le maintien sans jeu de l'élément d'emmanchement (22).

7. Dispositif selon la revendication 6, **caractérisé en ce que** les moyens destinés à assurer un maintien dépourvu de jeu comprennent des crampons de rive (28) réalisés sur les languettes d'immobilisation en position (27) et, ou encore, des motifs en relief réalisés par matriçage (42) sur les segments latéraux (23, 24) de l'élément d'emmanchement (22).

8. Système comprenant un dispositif réalisé conformément à l'une des revendications 1 à 7 et comprenant une pièce rapportée (29), **caractérisé en ce que** la pièce rapportée (29) est munie de nervures intermédiaires (36, 37) qui, dans la position de montage, sont disposées sur le côté de l'élément d'emmanchement (22) orienté vers l'extrémité inférieure (4) de l'agrafe insérable (1) et, dans la position d'extraction, sur le côté de l'élément d'emmanchement (22) orienté à l'opposé de l'extrémité inférieure (4) de l'agrafe insérable (1).
